# EUROPEAN PATENT APPLICATION

(11) **EP 4 692 750 A1**
(43) Date of publication of application: **11.02.2026**
(21) Application number: 24780339.8
(22) Date of filing: 26.03.2024
(51) Int. Cl.: G01M 17/007, G01M 7/08, G09B 9/00, G09B 25/00

(54) **HUMAN BODY DUMMY FOR COMFORT ASSESSMENT**

(30) Priority: 27.03.2023 JP 2023049650; 31.03.2023 JP 2023059084
(71) Applicant: Jasti Co., Ltd., Tokyo 135-0022 (JP)
(72) Inventor: OZAWA, Yoshihiro, Tokyo 135-0022 (JP)
(74) Representative: Grünecker Patent- und Rechtsanwälte PartG mbB
(86) International application number: PCT/JP2024/012011
(87) International publication number: WO 2024/204231

(57) **Abstract**

A human body dummy for comfort assessment comprises: a skeletal portion which is molded from a resin material; a fleshy portion which is formed from a material different from the resin material and which surrounds an outer periphery of the skeletal portion; and a skin portion which is disposed on an outer surface side of the fleshy portion. The skeletal portion is molded from resin materials that differ according to bone site, and has a bone weight of between 10% and 60% inclusive, of bone weight of a skeletal portion of a human body dummy for crash safety performance testing internationally standardized on the basis of human body data.

## Description

### TECHNICAL FIELD

The present invention relates to a human body dummy for comfort assessment comprising a lightweight skeletal portion that extremely closely resembles bones of a human body.

### BACKGROUND ART

Conventionally, a human body model (human body dummy) for crash testing has been used as a measurement tool for measuring injury received by a human in a crash safety performance test of an automobile, or the like. Moreover, improvement in crash safety performance, and so on, of an automobile has been achieved by, for example, boarding the human body dummy in the automobile in the same way as a human to conduct a crash safety performance test, and analyzing/utilizing data obtained from the test.

There is known as such a human body dummy a human body dummy comprising a skeletal portion having characteristics closely resembling bones of a human body (refer to Patent Document 1, for example). This human body dummy comprises a structure showing physical properties closely resembling those of the human body, and is formed having an appropriate bone weight, so is configured to enable the likes of cause and damage to the skeletal portion to be accurately reproduced, particularly in the case of a human having received an injury such as a fracture.

### PRIOR ART DOCUMENT

### PATENT DOCUMENT

Patent Document 1: Japanese Patent No. 6934248

### SUMMARY OF THE INVENTION

### PROBLEM TO BE SOLVED BY THE INVENTION

Incidentally, one example that could be given as a usage application of the human body dummy in recent years other than the above-described crash safety performance test is an assessment test for assessing habitability and comfort of an in-vehicle space of an automobile. In such an assessment test, due to the human body dummy being a weighty object having a similar bone weight or total weight as the human body, carriage of the human body dummy and seating of the human body dummy in the automobile interior to set the human body dummy in a regular posture, are performed by a large number of test implementers.

Therefore, a problem has arisen that merely to implement the assessment test on one occasion, a huge amount of manpower is required for setting the human body dummy in the automobile interior, and preparation time of the test lengthens. Hence, there has been an earnest desire to develop a human body dummy that while comprising equivalent characteristics and performance to a conventional human body dummy, is more lightweight than the conventional human body dummy.

The present invention has an object of further improving the above-mentioned conventional technology, and providing a human body dummy for comfort assessment that is highly carriable and that, while closely resembling bones of the human body, comprises a lightweight skeletal portion or total weight.

### MEANS FOR SOLVING THE PROBLEM

A human body dummy for comfort assessment according to the present invention comprises: a skeletal portion which is molded from a resin material; a fleshy portion which is formed from a material different from the resin material and which surrounds an outer periphery of the skeletal portion; and a skin portion which is disposed on an outer surface side of the fleshy portion, the skeletal portion being molded from resin materials that differ according to bone site, and having a bone weight of between 10% and 60% inclusive, of bone weight of a skeletal portion of a human body dummy for crash safety performance testing internationally standardized on the basis of human body data.

In one embodiment of the present invention, the skeletal portion includes: an upper limb portion excluding a pectoral girdle, and lower limb portion excluding a femur and a knee, that are molded from a first resin material; and a cranial bone, a cervical spine, a spine, the pectoral girdle, a pelvis, the femur, and the knee, that are molded from a second resin material.

In another embodiment of the present invention, the first resin material is a thermoplastic resin having a heat-resistant temperature of 200°C or more.

In yet another embodiment of the present invention, the first resin material is a carbon fiber resin or a PPS resin.

In yet another embodiment of the present invention, the second resin material is an ABS resin or a PLA resin.

In yet another embodiment of the present invention, the skeletal portion is molded by a three-dimensional shaping device. Moreover, a head including the cranial bone is connected to at least one of the cervical spine and the pectoral girdle, in a manner enabling the head to have its direction changed a predetermined angle at a time to left and right from a frontward-facing state.

A human body dummy for comfort assessment according to another aspect of the present invention comprises: a skeletal portion which is molded from a resin material; a fleshy portion which is formed from a material different from the resin material and which surrounds an outer periphery of the skeletal portion; and a skin portion which is disposed on an outer surface side of the fleshy portion, the skeletal portion being molded from resin materials that differ according to bone site, and total weight of the skeletal portion, the fleshy portion, and the skin portion being a weight of between 10% and 60% inclusive, of total weight of a human body dummy for crash safety performance testing internationally standardized on the basis of human body data.

In another embodiment of the present invention, sites of the skeletal portion corresponding to at least a cranial bone, a spine, a femur, and a knee, are molded having a hollow structure and a through-structure including a plurality of through-holes.

### EFFECT OF THE INVENTION

The present invention makes it possible to provide a human body dummy for comfort assessment that is highly carriable and that, while closely resembling bones of the human body, comprises a lightweight skeletal portion or total weight.

### BRIEF DESCRIPTION OF DRAWINGS

[FIG. 1] FIG. 1 is a diagram of front view in which overall configuration of a human body dummy for comfort assessment according to a first embodiment of the present invention is shown schematically emphasizing its skeletal portion.
[FIG. 2] FIG. 2 is a diagram of cross-sectional view taken along the line A-A' of FIG. 1.
[FIG. 3] FIG. 3 is a diagram for schematically explaining configuration of a cranial bone portion of a human body dummy for comfort assessment according to a second embodiment of the present invention.
[FIG. 4] FIG. 4 is a diagram for schematically explaining configuration of a spine portion of same human body dummy for comfort assessment.
[FIG. 5] FIG. 5 is a diagram for schematically explaining configuration of a femur portion of same human body dummy for comfort assessment.
[FIG. 6] FIG. 6 is a diagram for schematically explaining configuration of a knee portion of same human body dummy for comfort assessment.

### EMBODIMENTS FOR CARRYING OUT THE INVENTION

Hereinafter, a human body dummy for comfort assessment according to embodiments of the present invention will be described in detail, with reference to the accompanying drawings. However, the following embodiments are not intended to limit the inventions according to each of the claims, moreover, not all of the combinations of features described in the embodiments are necessarily essential to the means for solving the problem of the invention. Moreover, in the embodiments below, identical or corresponding configuring elements will be assigned with identical symbols, and duplicated descriptions thereof will be omitted. Moreover, in the embodiments below, arrangements, reduction scales, dimensions, and so on, of each of the configuring elements will sometimes be shown exaggerated or under-emphasized, in a state not in agreement with actual configuring elements, and some of the configuring elements will sometimes be shown with their description omitted.

### [First Embodiment]

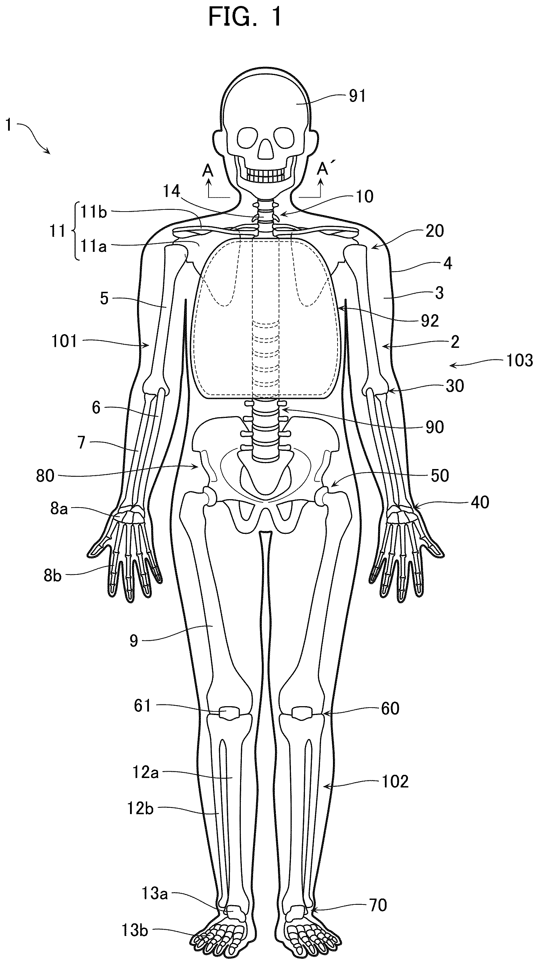

FIG. 1 is a diagram of front view in which overall configuration of a human body dummy for comfort assessment according to a first embodiment of the present invention is shown schematically emphasizing its skeletal portion.

As shown in FIG. 1, a human body dummy for comfort assessment (hereafter, abbreviated to "human body dummy") 1 is configured comprising: a skeletal portion 2; a fleshy portion 3 surrounding an outer periphery of the skeletal portion 2; and a skin portion 4 covering an outer surface of the fleshy portion 3. The skeletal portion 2 is molded partly simplified, based on human body data reproducible in the human body dummy 1, for example.

The human body data on which the skeletal portion 2 is founded includes, for example: standard data internationally standardized on the basis of a standard (49CFR Part572) due to US regulations of the NHTSA (National Highway Traffic Safety Administration); and various kinds of three-dimensional data such as X ray scanning data, CT scanning data, MRI scanning data, and so on.

Hence, it is possible for the skeletal portion 2 of the human body dummy 1 to be molded in an identical shape to that of bones of the human body data. Moreover, it is possible too for the skeletal portion 2 to be molded in either of a shape closely resembling that of bones of the human body data and a shape that while differing from that of bones of the human body data, has a functional structure the same as that of bones of the human body data (for example, a shape whose shape differs, but whose movement is the same, and so on). Moreover, it is possible too for the skeletal portion 2 to be molded having its movability characteristics and movability region made to closely resemble physical properties of bones of the human body, based on the human body data.

The human body data may be data of a specific individual themself, for example, or may be data obtained from at least one of the likes of an average boy or girl's body within a predetermined age range, an average young male or female's body, an average middle-aged male or female's body, and an average elderly male or female's body, as standard body shapes of the human body. One example that could be given as a standard body type of the human body is a body type stipulated in the above-described standard (49CFR Part572) and so on.

The skeletal portion 2 is molded from resin materials that differ according to bone site, for example. Moreover, the skeletal portion 2 is molded to have a bone weight of between 10% and 60% inclusive, and preferably between 10% and 51% inclusive, of bone weight of a skeletal portion of a human body dummy for crash safety performance testing internationally standardized on the basis of human body data (for example, a human body dummy of the likes of a hybrid III 50^{th} percentile male (50% standard male), or the like). Hereafter, a human body dummy for crash safety performance testing of a hybrid III 5^{th} percentile female will be described referred to as a "standard dummy" in the following description.

The skeletal portion 2 is configured including, for example: an upper limb portion 101; a lower limb portion 102; a cranial bone 91; a cervical spine 14; a spine 90 including a lumbar spine; a pelvis 80; and a thorax 92. The upper limb portion 101 is configured including, for example: a pectoral girdle 11 including a scapula 11a and a clavicle 11b; a humerus 5; an ulna 6; a radius 7; a carpus 8a; and a hand bone 8b. The lower limb portion 102 is configured including, for example: a femur 9; a tibia 12a; a fibula 12b; a knee 61; a talus 13a; and a foot bone 13b.

The skeletal portion 2 configured in this way has its upper limb portion 101 excluding the pectoral girdle 11 (hereafter, this will be called an "upper limb portion 101") and its lower limb portion 102 excluding the femur 9 and the knee 61 (hereafter, this will be called a "lower limb portion 102") molded from a thermoplastic resin having a heat-resistant temperature of 200°C or more, being a first resin material. Moreover, the skeletal portion 2 has its cranial bone 91, its cervical spine 14, its spine 90, its pectoral girdle 11, its pelvis 80, its femur 9, its knee 61, and its thorax 92 (hereafter, these will be collectively called an "other portion 103") molded from a second resin material different from the first resin material.

Note that in the example illustrated, the thorax 92 is molded in a curved plate-like shape having a cavity on its inside, functioning as a substitute bone. However, the thorax 92 may be molded in a shape corresponding to ribs, and so on, of an ordinary human body. Configuring the thorax 92 from such a substitute bone makes it possible for the number of components configuring the skeletal portion 2 to be reduced and manufacturing steps simplified, compared to a thorax configured from a plurality of ribs.

Examples of the first resin material include a carbon fiber resin (carbon resin) or a lightweight resin with equivalent performance to a carbon fiber resin (such as a PPS resin (poly-phenylene-sulfide resin)). Moreover, examples of the second resin material include an ABS resin (acrylonitrile-butadiene-styrene copolymer synthetic resin) or a PLA resin (polylactic acid resin), and it is also possible to apply a PA12 (polyamide 12) system resin as the second resin material. Hereafter, description will be made assuming that a carbon resin is employed as the first resin material, and an ABS resin is employed as the second resin material, but the present invention is not limited to this. For example, it is possible too for part of the other portion 103 to be molded from the first resin material, or for either of the upper limb portion 101 and the lower limb portion 102 to be molded from the second resin material. It is possible to freely combine any of the upper limb portion 101, the lower limb portion 102, and the other portion 103 in the skeletal portion 2 of the human body dummy 1 being molded from either of the first resin material and the second resin material.

The upper limb portion 101 and the lower limb portion 102 of the skeletal portion 2 are shaped by an unillustrated three-dimensional shaping device (3D printer) adopting the carbon resin as a resin filament. Moreover, the upper limb portion 101 and the lower limb portion 102 are molded by being sintered in the likes of a so-called mold oven for molding (not illustrated). Moreover, the other portion 103 is shaped by a 3D printer adopting the ABS resin as a resin filament, and is molded after a predetermined cooling period has elapsed.

Due to it being molded in the above-described way, the skeletal portion 2 is able to be configured with an extremely light weight, having a bone weight of between 10% and 51% inclusive, compared to bone weight of a skeletal portion of the standard dummy. One example of bone weight of the skeletal portion 2 of the human body dummy 1 with respect to bone weight of the skeletal portion of the standard dummy is as follows. For example, when bone weight of a cranial bone of the standard dummy is 3.73 kg, bone weight of the cranial bone 91 of the human body dummy 1 is molded at 1.86 kg. Moreover, when bone weight of a cervical spine of the standard dummy is 0.91 kg, bone weight of the cervical spine 14 of the human body dummy 1 is molded at 0.455 kg.

Moreover, when bone weight of a spine of the standard dummy is 12.02 kg, bone weight of the spine 90 of the human body dummy 1 is molded at 6.0 kg. Furthermore, when bone weight of a pelvis of the standard dummy is 13.25 kg, bone weight of the pelvis 80 of the human body dummy 1 is molded at 6.63 kg. Moreover, when bone weight of one humerus of the standard dummy is 1.18 kg and bone weight of one ulna and one radius of the standard dummy is 0.9 kg (total 2.08 kg), bone weight of one humerus 5 of the human body dummy 1 is molded at 0.59 kg and bone weight of one ulna 6 and one radius 7 of the human body dummy 1 is molded at 0.45 kg (total 1.04 kg).

Moreover, when one femur of the standard dummy is 3.13 kg, one femur 9 of the human body dummy 1 is molded at 1.565 kg. Moreover, when bone weight of one tibia and one fibula of the standard dummy is 3.27 kg, bone weight of one tibia 12a and one fibula 12b of the human body dummy 1 is molded at 1.635 kg. Furthermore, when bone weight of one talus and one foot bone of the standard dummy is 0.79 kg, bone weight of one talus 13a and one foot bone 13b of the human body dummy 1 is molded at 0.395 kg.

In the above configuration, bone weight of the standard dummy is 48.45 kg, and total bone weight including weight 0.6 kg of other unillustrated connecting components, and so on, of the standard dummy is set to 49.05 kg. On the other hand, bone weight of the human body dummy 1 is 24.215 kg, and total bone weight similarly including weight 0.785 kg of connecting components, and so on, of the human body dummy 1 is set to 25.0 kg. Bone weight of the skeletal portion 2 of the human body dummy 1 in this case is of the order of approximately 50% (is approximately 51% or less) of bone weight of the skeletal portion of the standard dummy. Note that when bone weight of the skeletal portion 2 of the human body dummy 1 is of the order of approximately 10% of bone weight of the skeletal portion of the standard dummy, bone weight of the skeletal portion 2 may be configured at approximately 5 kg. In this case, weight-lightening is achieved by structures of each of the above-described bones being molded with hollow structures, and so on.

Hence, compared to the standard dummy which requires a large number of people to carry it, the human body dummy 1 of the present embodiment is extremely highly carriable, due to it realizing a high level of weight-lightening while still having the skeletal portion 2 closely resembling bones of the human body. It therefore becomes possible for manpower needed for its carriage to a vehicle interior, setting in the vehicle interior, and so on, to be reduced over a conventional human body dummy.

On the other hand, the fleshy portion 3 of the human body dummy 1 may be formed so that, in a state of it covering the outer periphery of the skeletal portion 2 in a surrounding manner, it will reproduce a fleshed-out shape matching a body shape (degree of fleshiness) of the human body or a fleshed-out shape matching a body shape of the standard dummy, for example. The fleshy portion 3 is formed from a material, such as a urethane resin, for example, that differs from the above-described first and second resin materials configuring the skeletal portion 2, but the present invention is not limited to this.

Moreover, the skin portion 4, which is formed from a vinyl chloride resin or foamed polyurethane, is disposed surrounding an outer periphery of the fleshy portion 3 on an outer surface side of the fleshy portion 3. The skin portion 4 is formed with a thickness of about 10 mm, for example, but the present invention is not limited to this, it being possible too for the skin portion 4 to be made thinner than this in order for a more lightweight human body dummy 1 to be realized, and it being possible too for thickness of the skin portion 4 matching its site in the human body to be appropriately changed. The fleshy portion 3 and the skin portion 4 may be configured by a fleshy portion and skin portion consisting of a variety of publicly known materials applicable to a human body dummy.

Configuring the fleshy portion 3 and the skin portion 4 in the above-described way makes it possible for them to be used without any incongruity with the standard dummy during the likes of photography/filming of vehicle interior space. Moreover, because the human body dummy 1 configured in this way comprises the lightweight skeletal portion 2 having characteristics closely resembling those of a person's bones, it is possible too for it to be applied instead of the human body in various kinds of tests to obtain various kinds of data, for it to be put to use in investigation of causes and in reproduction for assessment of risky sites in the human body in crash testing, and so on, or for it to be utilized in assessment of in-vehicle sound space by having a sound sensor installed close to its ears.

Note that after weight, center-of-gravity position, and arrangement modes of each of portions of the human body dummy 1 combining the skeletal portion 2, fleshy portion 3, and skin portion 4, have been adjusted for age, sex, body shape, and so on, of the human body based on human body data, and have been adjusted for various specification sources, and so on, of the standard dummy, they may be manufactured to achieve even greater weight-lightening. Moreover, the skeletal portion 2 of the human body dummy 1 may be configured including a plurality of movable joint portions, similarly to the human body or standard dummy.

Assuming a reference state to be when the human body dummy 1 is in an upright immobile posture in a state of its two palms being open frontwards as shown in FIG. 1, for example, the plurality of movable joint portions may be movable in a movable range that has had pre-designated at least one of a vertical operating angle, a horizontal operating angle, and an inclined operating angle respectively individually determined at connecting points of joints from the reference state.

The plurality of movable joint portions of the skeletal portion 2 may be formed comprising a movable range allowing inner rotation, outer rotation, bending, and extension similar to movable joint portions of the human body, by each of the above-described operating angles, for example. The skeletal portion 2 may be molded having each of the following joint portions, specifically, a neck joint portion 10, a shoulder joint portion 20, an elbow joint portion 30, a radiocarpal joint portion 40, a hip joint portion 50, a knee joint portion 60, and a talocrural joint portion 70. The neck joint portion 10, which is configured capable of reproducing a movable region of the cervical spine 14, for example, may be configured including an atlantooccipital joint portion, an atlantoaxial joint portion, and an intervertebral joint portion, similarly to a skeleton of the human body. Note that these joint portions are each molded so as to be movable in a range described in publicly known above-mentioned Patent Document 1 (Japanese Patent No. 6934248), hence descriptions thereof will be omitted here.

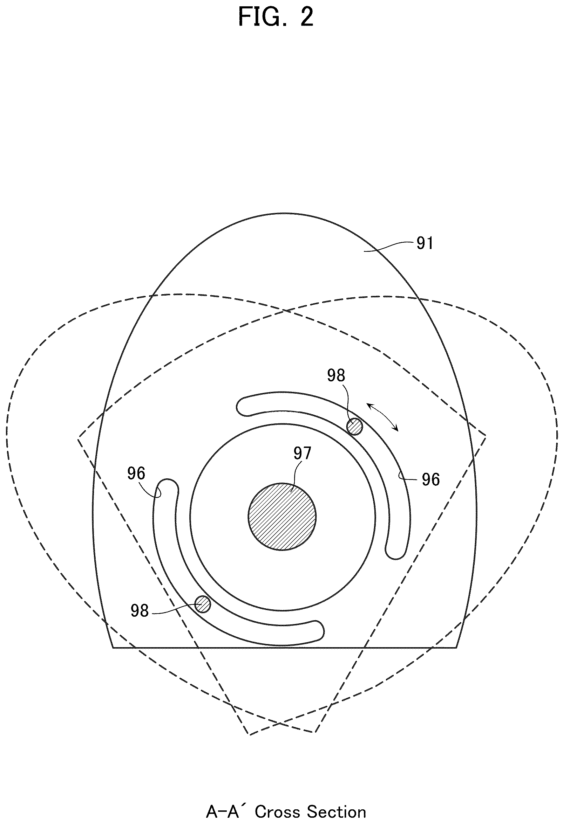

Note that as shown in FIG. 2, a head (not illustrated) of the human body dummy 1 including the cranial bone 91 may be configured to comprise a structure where, as shown by the broken lines in the drawing, direction of the head can be respectively changed a predetermined angle (for example, approximately 60°) at a time in left and right directions of the human body dummy 1 (the head can be moved in the left and right directions of the human body dummy 1), from a state of the cranial bone 91 facing frontwards shown by the solid line in the drawing, for example.

As one example of such a structure, for example, the head is connected by a connecting center portion 97 to the cervical spine 14, for example, at a bottom surface of the cranial bone 91, after which the head is supported by a trunk portion of the human body dummy 1. Moreover, the head is supported by the trunk portion of the human body dummy 1, by a plurality of head supporting rods 98 linked to the pectoral girdle 11, for example, being connected to the cranial bone 91 on a bottom surface side of the cranial bone 91, at a position separated in a radial direction of the drawing from the connecting center portion 97. Two of the head supporting rods 98 shown in FIG. 2 are provided at an interval of 180° in a periphery of the connecting center portion 97, but the present invention is not limited to this number.

Moreover, the head supporting rods 98 are each provided in a state of being respectively fitted into a plurality of arc-shaped grooves 96 formed in the bottom surface of the cranial bone 91. These arc-shaped grooves 96 form grooves extending in arc shapes enabling the head supporting rods 98 to each move relatively in a range of approximately 120° along a direction indicated by the arrows in the drawing. Providing a structure by which the head including the cranial bone 91 can be moved in the left and right directions in this way makes it possible for the human body dummy 1 to be also employed in the likes of an assessment test of a vehicle occupant's left-right visibility related to installation of an information providing device such as a meter panel and display device, by moving the human body dummy 1's head to left and right after the human body dummy 1 has been boarded in the vehicle, for example.

As indicated above, the human body dummy 1 of the first embodiment makes it possible for the upper limb portion 101 excluding the pectoral girdle 11, and the lower limb portion 102 excluding the femur 9 and knee 61, of the skeletal portion 2 to be molded from the likes of a carbon resin, and for the other portion 103 of the skeletal portion 2 to be molded from the likes of an ABS resin, hence enabling the skeletal portion 2 to be molded having a bone weight of between 10% and 51% inclusive, of bone weight of the skeletal portion of the standard dummy. As a result, the human body dummy 1 can comprise a skeletal portion 2 which is lightweight while closely resembling bones of the human body, hence enabling the human body dummy 1 to be more highly carriable, and more easily applied to various kinds of tests, such as a comfort assessment test. Note that configuration of the skeletal portion 2 is not limited to what has been mentioned above, and that there may be adopted a variety of configurations, such as molding the cervical spine 14, spine 90, and pelvis 80 as a single component, for example.

### [Second Embodiment]

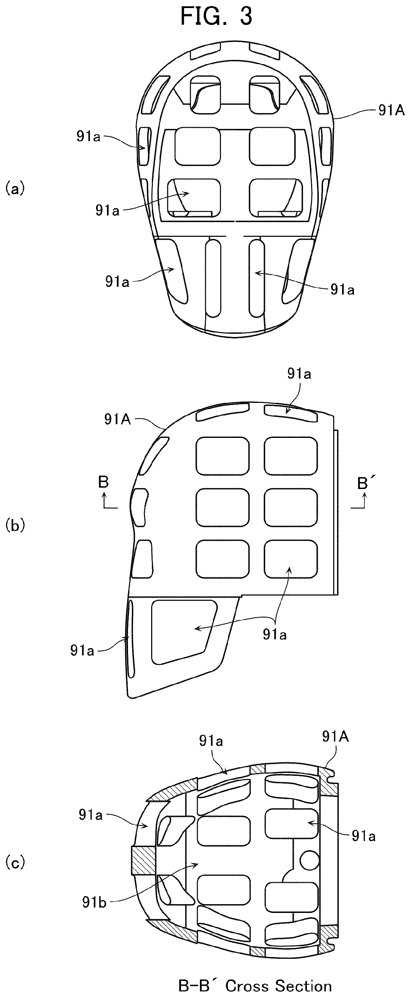

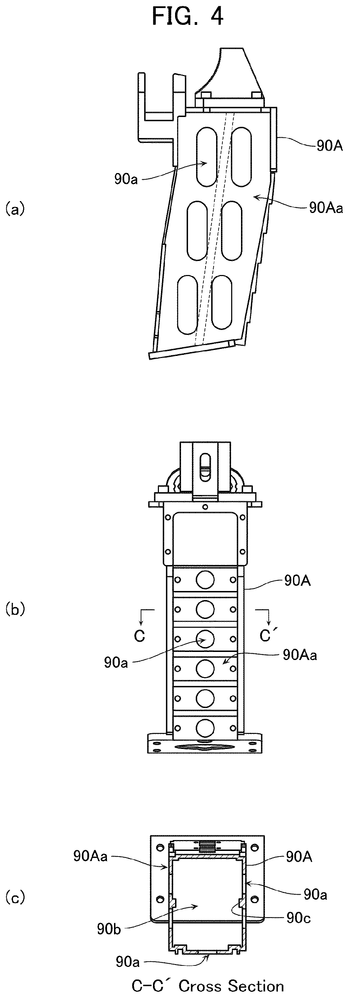

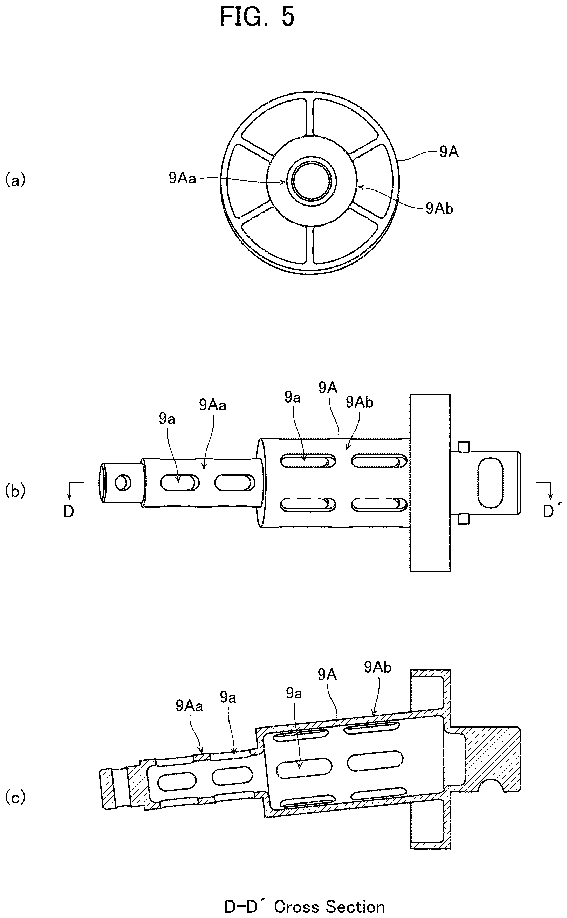

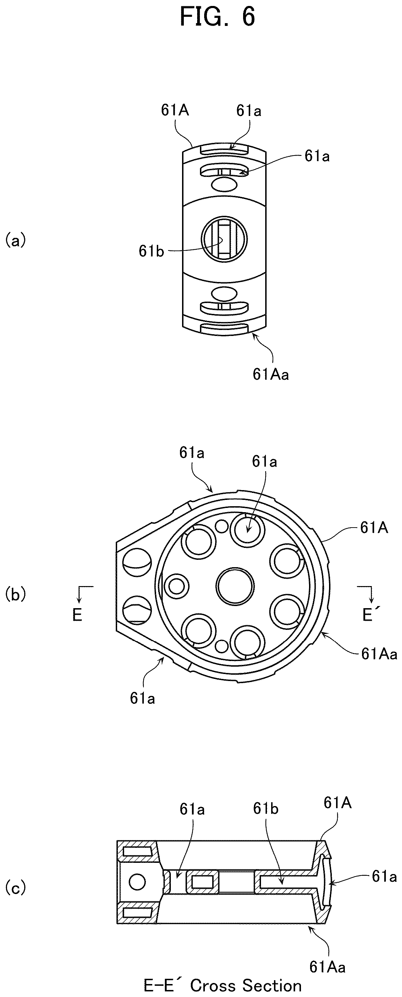

FIG. 3 is a diagram for schematically explaining configuration of a cranial bone portion of a human body dummy for comfort assessment according to a second embodiment of the present invention. FIG. 4 is a diagram for schematically explaining configuration of a spine portion of the human body dummy for comfort assessment. FIG. 5 is a diagram for schematically explaining configuration of a femur portion of the human body dummy for comfort assessment. FIG. 6 is a diagram for schematically explaining configuration of a knee portion of the human body dummy for comfort assessment. Note that in the description including that of FIG. 3 onward, duplicated descriptions of portions already described will be omitted.

In the human body dummy for comfort assessment according to the second embodiment, basic configurations including the above-mentioned upper limb portion 101, lower limb portion 102, and other portion 103, materials, and so on, are similar to in the human body dummy for comfort assessment 1 according to the first embodiment. However, the human body dummy for comfort assessment according to the second embodiment differs from in the first embodiment in that its total weight including that of not only the skeletal portion 2, but also the fleshy portion 3 and skin portion 4 has a weight of between 10% and 60% inclusive, and preferably between 10% and 51% inclusive, of total weight of the human body dummy for crash safety performance testing internationally standardized on the basis of human body data. Note that total weight here refers to a calculable weight including too a weight of various kinds of ancillary components such as bolts, nuts, and so on, connecting members, and so on, of each of the portions.

The human body dummy for comfort assessment according to the second embodiment has the following kind of total weight.

For example, total weight including the skeletal portion 2, fleshy portion 3, and skin portion 4, of a human body dummy for comfort assessment of equivalent size (height, and so on) to standard dummy A corresponding to a human body dummy for crash safety performance testing of a hybrid III 5^{th} percentile female whose total weight is 50 kg ±5% (US CFR Part572 Subpart 0: standard dummy A) is between 10% and 60% inclusive, and preferably between 10% and 51% inclusive of total weight of standard dummy A (for example, between 4.75 kg and 31.5 kg, and preferably between 4.75 kg and 26.775 kg).

Moreover, for example, total weight including the skeletal portion 2, fleshy portion 3, and skin portion 4, of a human body dummy for comfort assessment of equivalent size (height, and so on) to standard dummy B corresponding to a human body dummy for crash safety performance testing of a hybrid III 95^{th} percentile large adult male whose total weight is 100 kg ±5% (US SAE standard Large Male: standard dummy B) is between 10% and 60% inclusive, and preferably between 10% and 51% inclusive of total weight of standard dummy B (for example, between 9.5 kg and 63 kg, and preferably between 9.5 kg and 53.55 kg).

Moreover, for example, total weight including the skeletal portion 2, fleshy portion 3, and skin portion 4, of a human body dummy for comfort assessment of equivalent size (height, and so on) to standard dummy C corresponding to a hybrid III 50^{th} percentile human body dummy for crash safety performance testing whose total weight is 75 kg ±5% (CFR Part572 Subpart E: standard dummy C) is between 10% and 60% inclusive, and preferably between 10% and 51% inclusive of total weight of standard dummy C (for example, between 7.125 kg and 47.25 kg, and preferably between 7.125 kg and 40.1625 kg).

Specifically, for example, sites corresponding to at least a cranial bone 91A, spine 90A, femur 9A, and knee 61A, of the skeletal portion 2 of the human body dummy for comfort assessment, are molded having a hollow structure and a through-structure including a plurality of through-holes. The human body dummy for comfort assessment corresponding to standard dummy B will be described below as an example. For example, the cranial bone 91A is as shown in FIG. 3. Note that FIG. 3(a) exemplifies a front surface of the cranial bone 91A, FIG. 3(b) exemplifies a side surface of the cranial bone 91A, and FIG. 3(c) exemplifies a cross section taken along the line B-B' of FIG. 3(b).

As shown in FIGS. 3(a) to 3(c), the cranial bone 91A of the human body dummy for comfort assessment has a plurality of through-holes 91a respectively provided in the likes of its front surface, side surface, lower jaw, and crown portions. The cranial bone 91A comprises a hollow portion 91b which is provided inside the cranial bone 91A and is continuous with the plurality of through-holes 91a. Due to this kind of structure, the cranial bone 91A can be molded at approximately 2.03 kg, even when unillustrated bone portions such as a neck portion are included.

Moreover, at least a part of the spine 90A (hereafter, called "spine 90A"), for example, is as shown in FIG. 4. Note that FIG. 4(a) exemplifies a side surface of the spine 90A, FIG. 4(b) exemplifies a rear surface of the spine 90A, and FIG. 4(c) exemplifies a cross section taken along the line C-C' of FIG. 4(b).

As shown in FIGS. 4(a) to 4(c), the spine 90A of the human body dummy for comfort assessment has a plurality of through-holes 90a respectively provided in the side surface, rear surface, and so on, of its cross-sectionally rectangular-shaped portions 90Aa corresponding to vertebrae, for example. The cross-sectionally rectangular-shaped portion 90Aa of the spine 90A has its inside provided with a plurality of reinforcing ribs 90c for improving strength, for example. The spine 90A comprises a hollow portion 90b which is provided inside the cross-sectionally rectangular-shaped portion 90Aa and is continuous with the plurality of through-holes 90a. Due to this kind of structure, the spine 90A can be molded at approximately 8.97 kg, even when unillustrated bone portions such as a shoulder portion, clavicle, thorax, and lumbar spine are included.

Moreover, at least a part of the femur 9A (hereafter, called "femur 9A"), for example, is as shown in FIG. 5. Note that FIG. 5(a) exemplifies a view from below of the femur 9A, FIG. 5(b) exemplifies a side surface of the femur 9A, and FIG. 5(c) exemplifies a cross section taken along the line D-D' of FIG. 5(b).

As shown in FIGS. 5(a) to 5(c), the femur 9A of the human body dummy for comfort assessment has a plurality of through-holes 9a respectively provided in peripheral surfaces, and so on, of its radii-differing circular columnar portions 9Aa, 9Ab. The femur 9A comprises a hollow portion 9b which is provided inside the circular columnar portions 9Aa, 9Ab and is continuous with the plurality of through-holes 9a.

Furthermore, the knee 61A, for example, is as shown in FIG. 6. Note that FIG. 6(a) exemplifies a view from below of the knee 61A, FIG. 6(b) exemplifies a side surface of the knee 61A, and FIG. 6(c) exemplifies a cross section taken along the line E-E' of FIG. 6(b).

As shown in FIGS. 6(a) to 6(c), the knee 61A of the human body dummy for comfort assessment has a plurality of through-holes 61a respectively provided in the side surface, peripheral surface, and so on, of its disk-shaped portion 61Aa. The knee 61A comprises a hollow portion 61b which is provided inside the disk-shaped portion 61Aa and is continuous with the plurality of through-holes 61a. Moreover, due to the femur 9A shown in FIG. 5 and knee 61A shown in FIG. 6 being given these kinds of structures, the femur 9A and knee 61A can be molded at between approximately 3.236 kg and 3.300 kg, even when unillustrated bone portions such as a kneecap are included.

Although illustration of the following will be omitted, the skeletal portion 2 of the human body dummy for comfort assessment according to the second embodiment can additionally have through-holes formed in a variety of sites thereof, and have a hollow structure adopted therein, hence enabling even greater weight-lightening to be achieved than in the first embodiment, and allowing total weight to be easily set to between 10% and 51% inclusive, compared to total weight of standard dummies A, B, and so on.

Note that by appropriately adjusting heating temperature and heating time of the skin portion 4 formed from the likes of a vinyl chloride resin, for example, the skin portion 4 will be molded to have a desired thickness thinner than a standard thickness (for example, a thickness of the order of between approximately 2 mm and approximately 8mm, which is of the order of approximately 50% of ordinary thickness). Moreover, thickness of the fleshy portion 3 formed from the likes of a urethane resin will be formed proportionately thicker by an amount that thickness of the skin portion 4 has been thinned. By so doing, internal volume of the lightweight fleshy portion 3 can be increased, making it possible to realize further weight-lightening of the human body dummy for comfort assessment, as well as that of the lightweight skeletal portion 2.

Note that in the above-described embodiments, sites corresponding to at least the cranial bone, spine, femur, and knee of the skeletal portion had a hollow structure and a through-structure including a plurality of through-holes. However, it is possible to configure weight-lightening to be achieved by sites corresponding to at least the cranial bone, spinae, femur, and knee of the skeletal portion being molded by a porous material.

While certain embodiments have been described, these embodiments have been presented by way of example only, and are not intended to limit the scope of the inventions. Indeed, the novel devices and methods described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### DESCRIPTION OF REFERENCE NUMERALS

- 1: human body dummy for comfort assessment (human body dummy)
- 2: skeletal portion
- 3: fleshy portion
- 4: skin portion
- 5: humerus
- 6: ulna
- 7: radius
- 8a: carpus
- 8b: hand bone
- 9, 9A: femur
- 10: neck joint portion
- 11: pectoral girdle
- 11a: scapula
- 11b: clavicle
- 12a: tibia
- 12b: fibula
- 13a: talus
- 13b: foot bone
- 14: cervical spine
- 20: shoulder joint portion
- 30: elbow joint portion
- 40: radiocarpal joint portion
- 50: hip joint portion
- 60: knee joint portion
- 61, 61A: knee
- 70: talocrural joint portion
- 80: pelvis
- 90, 90A: spine
- 91, 91A: cranial bone
- 92: thorax

## Claims

1. A human body dummy for comfort assessment comprising:
a skeletal portion which is molded from a resin material;
a fleshy portion which is formed from a material different from the resin material and which surrounds an outer periphery of the skeletal portion; and
a skin portion which is disposed on an outer surface side of the fleshy portion,
the skeletal portion being molded from resin materials that differ according to bone site, and having a bone weight of between 10% and 60% inclusive, of bone weight of a skeletal portion of a human body dummy for crash safety performance testing internationally standardized on the basis of human body data.

2. The human body dummy for comfort assessment according to claim 1, wherein
the skeletal portion includes:
an upper limb portion excluding a pectoral girdle, and lower limb portion excluding a femur and a knee, that are molded from a first resin material; and
a cranial bone, a cervical spine, a spine, the pectoral girdle, a pelvis, the femur, and the knee, that are molded from a second resin material.

3. The human body dummy for comfort assessment according to claim 2, wherein
the first resin material is a thermoplastic resin having a heat-resistant temperature of 200°C or more.

4. The human body dummy for comfort assessment according to claim 2 or 3, wherein
the first resin material is a carbon fiber resin or a PPS resin.

5. The human body dummy for comfort assessment according to claim 2 or 3, wherein
the second resin material is an ABS resin or a PLA resin.

6. The human body dummy for comfort assessment according to claim 5, wherein
the skeletal portion is molded by a three-dimensional shaping device.

7. The human body dummy for comfort assessment according to claim 2, wherein
a head including the cranial bone is connected to at least one of the cervical spine and the pectoral girdle, in a manner enabling the head to have its direction changed a predetermined angle at a time to left and right from a frontward-facing state.

8. A human body dummy for comfort assessment comprising:
a skeletal portion which is molded from a resin material;
a fleshy portion which is formed from a material different from the resin material and which surrounds an outer periphery of the skeletal portion; and
a skin portion which is disposed on an outer surface side of the fleshy portion,
the skeletal portion being molded from resin materials that differ according to bone site, and total weight of the skeletal portion, the fleshy portion, and the skin portion being a weight of between 10% and 60% inclusive, of total weight of a human body dummy for crash safety performance testing internationally standardized on the basis of human body data.

9. The human body dummy for comfort assessment according to claim 8, wherein
sites of the skeletal portion corresponding to at least a cranial bone, a spine, a femur, and a knee, are molded having a hollow structure and a through-structure including a plurality of through-holes.

10. The human body dummy for comfort assessment according to claim 8, wherein
sites of the skeletal portion corresponding to at least a cranial bone, a spine, a femur, and a knee, are molded by a porous material.
